# EUROPEAN PATENT APPLICATION

(11) **EP 3 442 139 A1**
(43) Date of publication of application: **13.02.2019**
(21) Application number: 17774678.1
(22) Date of filing: 23.03.2017
(51) Int. Cl.: H04B 10/69, H04L 1/00

(54) **OPTICAL RECEIVER, OPTICAL TRANSMISSION SYSTEM, SUBMARINE OPTICAL CABLE SYSTEM, AND OPTICAL SIGNAL RECEIVING METHOD**

(30) Priority: 31.03.2016 JP 2016070620
(71) Applicant: NEC Corporation, Tokyo 108-8001 (JP)
(72) Inventor: HARA Yasushi, Tokyo 108-8001 (JP)
(74) Representative: Betten & Resch
(86) International application number: PCT/JP2017/011772
(87) International publication number: WO 2017/170140

(57) **Abstract**

[Problem]

To provide an optical receiver that can economically obtain error correction capability equivalent to or greater than capability based on an error correction code.

[Solution Means]

An optical receiver 2 that receives an optical signal including an error correction code includes: an optical branching unit 12 that branches a received optical signal into three optical signals, and outputs the optical signals; three of a first, a second, and a third optical receiving circuits 13, 14, and 15 each of which inputs one of the three branched optical signals, operates independently, and performs signal processing including an identification and reproduction process concerning an input optical signal and an error correction process based on the error correction code; and a bit determining circuit 19 that performs, in a bit unit, majority-decision determination on three signals on which error correction processes have been performed and that are output respectively from three of the first, the second, and the third optical receiving circuits 13, 14, and 15, and outputs a signal determined as being correct.

## Description

### [Technical Field]

The present invention relates to an optical receiver, an optical transmission system, a submarine optical cable system, and an optical signal receiving method, and particularly to an optical receiver, an optical transmission system, a submarine optical cable system, and an optical signal receiving method that can improve error correction capability.

### [Background Art]

Although introduction of an error correction code has dramatically improved optical transmission performance of an optical transmission device, reception performance, meanwhile, depends on performance of the error correction code. For this reason, each vendor of optical transmission devices is dedicated to developing a coding method with high correction capability. When error correction capability becomes higher, an optical signal with a lower optical-signal-to-noise ratio (OSNR) can be received, and long distance transmission or a span of relaying by an optical amplifier can be extended. Examples of a method for improving performance of the error correction code include a method of using two kinds of codes, a method of increasing a redundant code, and the like. However, error correction capability is determined by a coding method, and a method of increasing a redundant code also requires expansion of a band of a receiving circuit, and thus there is a possibility that a noise is increased and reception characteristics are thereby deteriorated.

Thus, there is a limit to improvement of correction capability obtained by only improving an error correction code. In view of the above, as a technique for improving error correction capability without depending on improvement of an error correction code, there is a proposed technique in which an optical transmission system has a redundant configuration and a normal optical signal is output by majority-decision logic. For example, in PTL 1, on an optical transmission side, the same main signal is route-diversified by a plurality of carriers and transmitted to an opposite side. PTL 1 proposes a technique in which majority-decision determination is performed, on an optical reception side, on respective codes of electric signals acquired from a result of reproduction of the optical signals of a plurality of carriers, and thereby, a signal of a correct code is selected and output.

Further, in PTL 2, on an optical transmission side, the same main signals are transmitted as signals with different transmission speeds and transmission timings to an opposite side through a plurality of transmission lines. Alternatively, in PTL 2, the same main signals are time-division-multiplexed repeatedly three times, and repeatedly transmitted to one transmission line. PTL 2 proposes a technique in which majority-decision determination or matching determination is performed, on an optical reception side, on the received result, and thereby, a signal of a correct code is selected and output.

### [Citation List]

### [Patent Literature]

[PTL 1] Japanese Unexamined Patent Application Publication No. 2007-184860
[PTL 1] Japanese Unexamined Patent Application Publication No. H7-250050

### [Summary of Invention]

### [Technical Problem]

However, the techniques of PTL 1 and PTL 2 differ in implementation means such as formation of a plurality of routes, a transmission speed difference, a transmission timing difference, and generation of a plurality of transmission signals, meanwhile, are techniques each of which aims at dispersing causes of errors occurring on an optical transmission line. Accordingly, in the techniques of PTL 1 and PTL 2, redundancy needs to be added to an entire optical transmission system including the optical transmission side and the optical transmission line. Thus, in the techniques of PTL 1 and PTL 2, there is a problem to be solved that installation cost and operation cost increase, or band crowding occurs due to the same signals transmitted to the optical transmission line a plurality of times.

In order to solve the problem as described above, an object of the present invention is to provide an optical receiver, an optical transmission system, a submarine optical cable system, and an optical signal receiving method that can economically obtain error correction capability equivalent to or greater than capability based on an error correction code.

### [Solution to Problem]

In order to solve the above-described problem, an optical receiver, an optical transmission system, a submarine optical cable system, and an optical signal receiving method according to the present invention mainly adopt the following characteristic configuration.
(1) An optical receiver according to the present invention is an optical receiver that receives an optical signal including an error correction code, the optical receiver including:
   an optical branching means for branching a received optical signal into three optical signals, and outputting the optical signals;
   three optical signal processing means for inputting one of the three optical signals branched by the optical branching means, operating independently, and performing signal processing including an identification and reproduction process concerning the input optical signal and an error correction process based on the error correction code; and
   a bit determining means for performing, in a bit unit, majority-decision determination on the three signals on which error correction processes have been performed and that are output respectively from the three optical signal processing means, and outputting a signal determined as being correct.
(2) An optical transmission system according to the present invention is an optical transmission system that includes an optical transmitter, an optical transmission line, and an optical receiver, wherein the optical receiver is configured by using the optical receiver according to the above (1).
(3) A submarine optical cable system according to the present invention is a submarine optical cable system that includes an optical transmitter, a submarine optical cable, a submarine optical repeater, and an optical receiver, wherein the optical receiver is configured by using the optical receiver according to the above (1).
(4) An optical signal receiving method according to the present invention is an optical signal receiving method for receiving an optical signal including an error correction code, the method including:
   an optical branching step of branching a received optical signal into three optical signals, and outputting the optical signals;
   an optical signal processing step of inputting each one of the three branched optical signals, and independently performing, on each of the input optical signals, signal processing including an identification and reproduction process concerning the input optical signal and an error correction process based on the error correction code; and
   a bit determining step of performing, in a bit unit, majority-decision determination on the three signals that are generated in the optical signal processing step and on which error correction processes have been performed, and outputting a signal determined as being correct.

### [Advantageous Effects of Invention]

According to the optical receiver, the optical transmission system, the submarine optical cable system, and the optical signal receiving method of the present invention, the following advantageous effect can be achieved.

Specifically, in the present invention, it is possible to obtain an advantageous effect that correction capability equivalent to or greater than capability of an error correction code can be economically obtained. Even without redundant configurations of the optical receiver and an optical transmission line, this advantageous effect by the present invention is achieved by the reason that the redundant configuration is introduced only to the optical receiver, and three optical signal processing means installed in the optical receiver independently perform separate signal processing, respectively, resulting in that positions of errors remaining after correction based on respective error correction codes generally vary as well, whereby separately from an error correction code, additional error correction can be made by performing error determination by majority-decision determination.

### [Brief Description of Drawings]

Fig. 1 is a block configuration diagram illustrating one example of an internal configuration of an optical receiver according to an example embodiment of the present invention.
Fig. 2 is time charts for illustrating one example of synchronization processes in three of a first synchronization circuit, a second synchronization circuit, and a third synchronization circuit in the optical receiver illustrated in Fig. 1
Fig. 3 is a schematic diagram for illustrating a limit of error correction capability in a forward error correction circuit incorporated in each of a first optical receiving circuit, a second optical receiving circuit, and a third optical receiving circuit in the optical receiver of Fig. 1.
Fig. 4 is a diagram illustrating that an optical receiver in a general submarine optical cable system can be replaced with the optical receiver (one example embodiment of the present invention) in Fig. 1.

### [Example Embodiment]

A preferred example embodiment of an optical receiver, an optical transmission system, a submarine optical cable system, and an optical signal receiving method according to the present invention is described below with reference to the accompanying drawings. Note that the optical receiver and the optical signal receiving method according to the example embodiment of the present invention are described in the following description, it is certainly possible that such an optical receiver applies to an optical transmission system including an optical transmission line, an optical transmitter, and an optical receiver. Further, such an optical receiver is certainly applicable to not only a transmission system on land but also a submarine optical cable system.

Further, the drawing reference symbols attached to the respective drawings below are attached to the respective elements, for convenience, as one example for facilitating understanding, and it goes without saying that the present invention is not intended to be limited to the illustrated configuration.

### (Feature of the Present Invention)

Before the description of the example embodiment of the present invention, the outline of the feature of the present invention is first described.

In the present invention, on the optical receiver side, one received optical signal is branched into three optical signals, and these three optical signals are signal-processed by three optical receiving circuits, independently from one another. The present invention is characterized mainly by including a mechanism in which a bit determining circuit compares, in a unit of one bit, three signals output from the respective optical receiving circuits, and performs majority-decision determination from a result of which a signal determined as being correct is output. Thus, an economical system having error correction capability equivalent to or greater than the capability of an error correction code can be implemented not by an entire system of an optical transmission system or a submarine optical cable system, but by the redundant configuration only on the optical receiver side. Further, in the present invention, configuration change from the conventional optical transmission system is only on the optical receiver side, and its application to not only an optical transmission system on land but also even a submarine optical cable system can be easily made without depending on a newly installed system or an existing system.

### (Configuration of Example Embodiment)

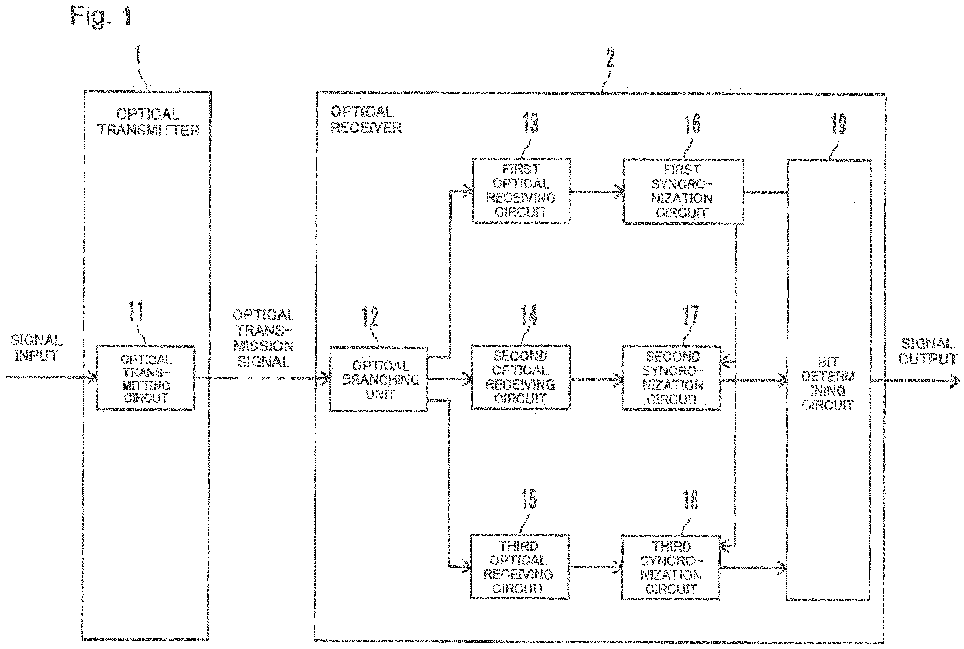

Next, one example embodiment of an optical receiver according to the present invention is described in detail with reference to Fig. 1. Fig. 1 is a block configuration diagram illustrating one example of an internal configuration of the optical receiver according to the one example embodiment of the present invention, and also illustrates an optical transmitter opposite to the optical receiver.

In Fig. 1, the optical transmitter 1 opposite to the optical receiver 2 includes an optical transmitting circuit 11, and adds an error correction code when a signal (electric signal) to be transmitted is input to the optical transmitting circuit 11. After adding the error correction code, the optical transmitter 1 converts the electrical signal into an optical signal, and transmits the converted signal as an optical transmission signal to the side of the optical receiver 2 via an optical transmission line. Note that in practice, the optical signal output from the optical transmitter 1 is multiplexed by a wavelength multiplexer, is reproduced and relayed by an optical amplifier, and is transmitted to the side of the optical receiver 2. On the side of the optical receiver 2, a process of separating the received wavelength-multiplexed optical transmission signal per wavelength and extracting the optical signal is performed. In the present example embodiment, such a configuration is not an important essential constituent element, and thus, the illustration in Fig. 1 is omitted in order to simplify the description.

The optical receiver 2 illustrated in Fig. 1 is configured in such a way as to include an optical branching unit 12, a first optical receiving circuit 13, a second optical receiving circuit 14, and a third optical receiving circuit 15 three of which are arranged in parallel, a first synchronization circuit 16, a second synchronization circuit 17, and a third synchronization circuit 18 three of which are arranged in parallel, and a bit determining circuit 19.

In other words, when receiving the optical signal that has been separated per wavelength and that includes an error correction code, the optical receiver 2 illustrated in Fig. 1 branches the optical signal into three optical signals, and performs, independently on the respective optical signals, various signal processes including an identification and reproduction process and an error correction process. The optical receiver 2 illustrated in Fig. 1 is configured in such a way as to extract a signal determined as being correct by performing majority-decision determination on the three signals acquired by the signal processes, and in this manner, convert the signal back into the original signal (electric signal) input on the side of the optical transmitter 1, and output the converted signal.

Here, the optical branching unit 12 is an optical branching means that branches, into three optical signals, an optical signal received via the optical transmission line, and that outputs the optical signals. The first optical receiving circuit 13, the second optical receiving circuit 14, and the third optical receiving circuit 15 each receive one optical signal of the three optical signals that have been branched at the optical branching unit 12. Each of the first optical receiving circuit 13, the second optical receiving circuit 14, and the third optical receiving circuit 15 independently operates, and performs, on the input signal, signal processes including an identification and reproduction process and an error correction process based on an error correction code. Each of these three optical receiving circuits is the above-described optical signal processing means. The first synchronization circuit 16, the second synchronization circuit 17, and the third synchronization circuit 18 are bit synchronization means that synchronizes, in a bit unit, the three signals that are output respectively from the first optical receiving circuit 13, the second optical receiving circuit 14, and the third optical receiving circuit 15 and on which the error correction processes have been performed. Further, the bit determining circuit 19 performs, in a bit unit, majority-decision determination on the three signals that are output respectively from the three of the first synchronization circuit 16, the second synchronization circuit 17, and the third synchronization circuit 18 and on which the error correction processes have been performed, and outputs the signal determined as being correct. The bit determining circuit 19 is the above-described bit determining means.

In other words, in the optical receiver 2, the received optical signal is input to the optical branching unit 12 and branched into three optical signals. The optical branching unit 12 includes three optical output ports, and these three optical output ports are respectively connected to the first optical receiving circuit 13, the second optical receiving circuit 14, and the third optical receiving circuit 15. Each of the first optical receiving circuit 13, the second optical receiving circuit 14, and the third optical receiving circuit 15 independently performs the signal process on the input optical signal that has been branched at the optical branching unit 12, converts the optical signal into the electric signal, performs the error correction process, and outputs the signal.

Outputs of the first optical receiving circuit 13, the second optical receiving circuit 14, and the third optical receiving circuit 15 are connected respectively to the first synchronization circuit 16, the second synchronization circuit 17, and the third synchronization circuit 18. The first synchronization circuit 16 outputs a synchronization timing signal to the second synchronization circuit 17 and the third synchronization circuit 18. This synchronization timing signal is supplied in common with the first synchronization circuit 16, the second synchronization circuit 17, and the third synchronization circuit 18 in order to make synchronization for each bit. In other words, the first synchronization circuit 16, the second synchronization circuit 17, and the third synchronization circuit 18 synchronize, for each bit, the signals respectively output from the first optical receiving circuit 13, the second optical receiving circuit 14, and the third optical receiving circuit 15, based on the synchronization timing signal, thereby synchronize the signals with the same timing, and output the signals.

Respective outputs of the first synchronization circuit 16, the second synchronization circuit 17, and the third synchronization circuit 18 are input to the bit determining circuit 19. The bit determining circuit 19 compares, for each bit, the signals output respectively from the first synchronization circuit 16, the second synchronization circuit 17, and the third synchronization circuit 18, and performs the majority-decision determination, and outputs the signal determined as being correct by the majority-decision determination.

As described above up to this point, the optical receiver 2 illustrated in Fig. 1 synchronizes, for each bit, the signals output respectively from the first optical receiving circuit 13, the second optical receiving circuit 14, and the third optical receiving circuit 15. The optical receiver 2 illustrated in Fig. 1 includes three of the first synchronization circuits 16, the second synchronization circuit 17, and the third synchronization circuit 18, and compares the three signals at the same timing in the bit determining circuit 19, thereby enabling comparison in a bit unit to be easily performed. The optical receiver 2 may be configured in such a way as to collect phase differences among the respective signals output respectively from the optical receiving circuit 13, the second optical receiving circuit 14, and the third optical receiving circuit 15, notify the bit determining circuit 19 of the phase differences, and compare the three signals by taking into account the notified phase differences in the bit determining circuit 19.

### (Description of Operation of Example Embodiment)

Next, one example of an operation of the optical receiver 2 illustrated in Fig. 1 is described in detail.

In the optical transmitter 1 opposite to the optical receiver 2, the optical transmitting circuit 11 adds an error correction code to an input signal, then converts the signal into an optical signal suitable for optical wavelength multiplex transmission, and transmits the optical signal as the optical transmission signal to the optical receiver 2.

In the optical receiver 2, when receiving optical signals that have been separated per wavelength from the optical transmission signal transmitted from the optical transmitter 1, the optical branching unit 12 branches the received optical signal into three optical signals. The optical branching unit 12 outputs the three branched optical signals respectively to the first optical receiving circuit 13, the second optical receiving circuit 14, and the third optical receiving circuit 15 three of which are arranged in parallel. Each of the first optical receiving circuit 13, the second optical receiving circuit 14, and the third optical receiving circuit 15 independently operates, receives the optical signal inputted thereto, performs identification and reproduction, and converts the signal into an electric signal. Further, after that, an incorporated forward error correction circuit (FEC) performs, by an error correction code added by the optical transmitting circuit 11 on the side of the optical transmitter 1, error correction on the signal that has converted into the electric signal, and outputs the signal.

The signals output from the first optical receiving circuit 13, the second optical receiving circuit 14, and the third optical receiving circuit 15 are input respectively to three of the first synchronization circuits 16, the second synchronization circuit 17, and the third synchronization circuit 18. The first synchronization circuit 16 outputs a synchronization timing signal to the second synchronization circuit 17 and the third synchronization circuit 18. In synchronization with the synchronization timing signal from the first synchronization circuit 16, the second synchronization circuit 17 and the third synchronization circuit 18 cue up the signals output respectively from the second optical receiving circuit 14 and the third optical receiving circuit 15. By the cuing-up in synchronization with the synchronization timing signal, the second synchronization circuit 17 and the third synchronization circuit 18 performs positioning (a synchronization process) in such a way that the signals output respectively from the first synchronization circuit 16, the second synchronization circuit 17, and the third synchronization circuit 18 are synchronized with the same timing.

Here, the synchronization timing signal output by the first synchronization circuit 16 to the second synchronization circuit 17 and the third synchronization circuit 18 is a signal generated at a timing when a control signal is detected in the first synchronization circuit 16, the control signal being predetermined and included in an overhead part of an optical signal transmitted from the side of the optical transmitter 1. The control signal is a predetermined control signal that is any one among control signals such as a synchronization signal and an error correction signal, for example. Accordingly, the second synchronization circuit 17 and the third synchronization circuit 18 may operate in such a way as to synchronize, with the synchronization timing signal from the first synchronization circuit 16, a timing of outputting the predetermined control signal included in the signals output respectively from the second optical receiving circuit 14 and the third optical receiving circuit 15.

In one example of the synchronization process in the first synchronization circuit 16, the second synchronization circuit 17, and the third synchronization circuit 18, for example, when an optical transport network (OTN) frame is applied to the optical signal, the synchronization can be made by detecting a frame synchronization signal (frame alignment sequence (FAS)) included in an overhead part of the OTN frame.

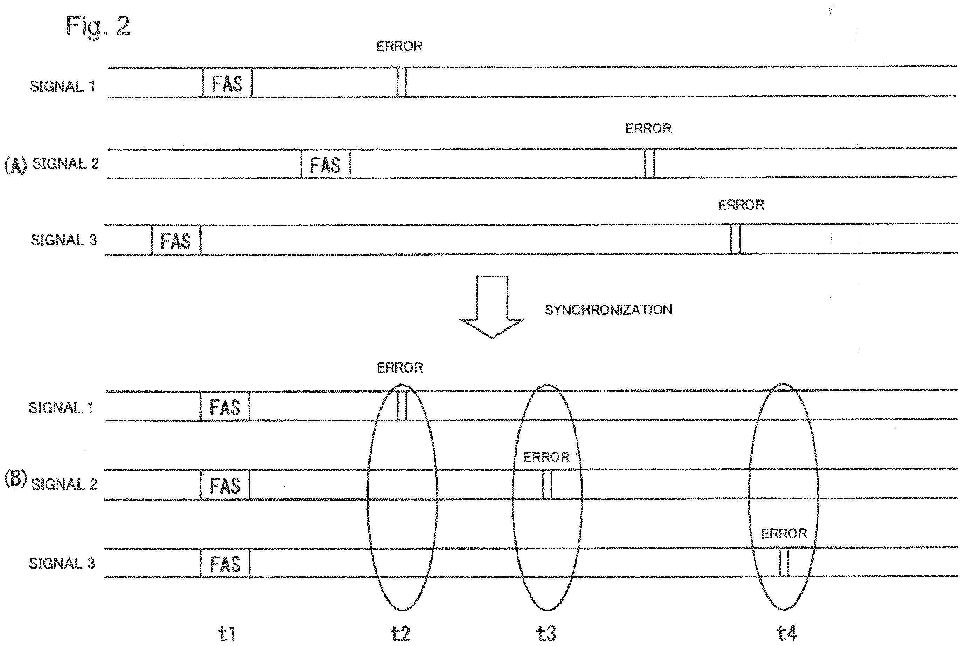

Fig. 2 is time charts for illustrating one example of the synchronization processes in three of the first synchronization circuit 16, the second synchronization circuit 17, and the third synchronization circuit 18 in the optical receiver 2 illustrated in Fig. 1. In Fig. 2, (A) illustrates a signal 1, a signal 2, and a signal 3 input respectively to the first synchronization circuit 16, the second synchronization circuit 17, and the third synchronization circuit 18. In Fig. 2, (B) illustrates the signal 1, the signal 2, and the signal 3 on which the synchronization process has been performed and that are output respectively from the first synchronization circuit 16, the second synchronization circuit 17, and the third synchronization circuit 18.

As illustrated in the time charts of the signal 1, the signal 2, and the signal 3 in (A) of Fig. 2, timings of the respective signals output respectively from the first optical receiving circuit 13, the second optical receiving circuit 14, and the third optical receiving circuit 15 and input respectively to the first synchronization circuit 16, the second synchronization circuit 17, and the third synchronization circuit 18 are different from one another. The first synchronization circuit 16 monitors a frame synchronization signal (FAS) included in an overhead part of the signal 1, and at the timing of detecting the frame synchronization signal (FAS), outputs a synchronization timing signal to each of the second synchronization circuit 17 and the third synchronization circuit 18. When receiving the synchronization timing signal from the first synchronization circuit 16, by delay circuits or the like, the second synchronization circuit 17 and the third synchronization circuit 18 adjust timings when the frame synchronization signals (FAS) included in the respective signal 2 and signal 3 appear. As a result, as illustrated in the time charts of the signal 2 and the signal 3 in (B) of Fig. 2, the frame synchronization signals (FAS) in the signal 2 and the signal 3 are adjusted in such a way as to synchronize with the timing (t1 in (B) of Fig. 2) of the frame synchronization signal (FAS) of the signal 1 output from the first synchronization circuit 16.

The timings of the frame synchronization signals (FAS) of the signal 1, the signal 2, and the signal 3 output respectively from the first synchronization circuit 16, the second synchronization circuit 17, and the third synchronization circuit 18 synchronize with one another, and thereby, the respective signals of the signal 1, the signal 2, and the signal 3 are output at the same timing for each bit, and are input to the bit determining circuit 19. Thus, in the bit determining circuit 19, the data (codes) at the same position included in the three signals of the signal 1, the signal 2, and the signal 3 can be compared at the same timing. In other words, the bit determining circuit 19 compares, in a bit unit, three sets of data at the same timing (at the same time position) included in the signal 1, the signal 2, and the signal 3 output respectively from the first synchronization circuit 16, the second synchronization circuit 17, and the third synchronization circuit 18, and performs a majority-decision determination process.

For example, at the timing t2 in (B) of Fig. 2, the data (one bit) of the signal 1 are different from the data (one bit) of the signal 2 and the data (one bit) of the signal 3. In such a case, the data of signal 1 are determined as an error and ignored by the majority-decision determination, and one bit of data on the side of the signal 2 and the signal 3 are output from the bit determining circuit 19. Similarly, at the timing t3, the data of the signal 2 are determined as an error and ignored by the majority-decision determination, and one bit of the data on the side of the signal 1 side and the signal 3 are output from the bit determining circuit 19. At the timing t4, the data of the signal 3 are determined as an error and ignored by the majority-decision determination, and one bit of the data on the side the signal 1 and the signal 2 are output from the bit determining circuit 19.

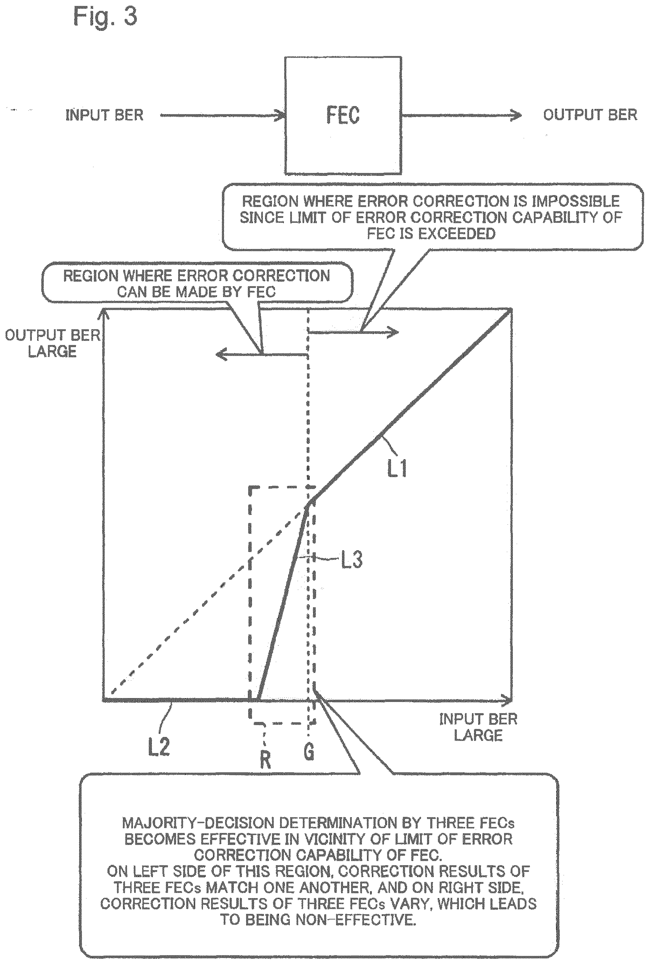

Next, a limit of error correction capability based on an error correction code is supplementarily described with reference to the explanatory diagram of Fig. 3. As described above, a forward error correction circuit (FEC) is incorporated in each of the first optical receiving circuit 13, the second optical receiving circuit 14, and the third optical receiving circuit 15 three of which are arranged in parallel, and the forward error correction circuit performs, by an error correction code, error correction on a signal resulting from reproduction of the optical signal. As illustrated in Fig. 3, the error correction capability based on the error correction code has a limit depending on a degree of bit errors (code errors) included in the signal. Fig. 3 is a schematic diagram illustrating the limit of the error correction capability in the forward error correction circuit (FEC) incorporated in each of the first optical receiving circuit 13, the second optical receiving circuit 14, and the third optical receiving circuit 15 in the optical receiver 2 of Fig. 1.

As indicated by the limit value G on the horizontal axis in Fig. 3, when a bit error rate BER (also referred to as a code error rate) of the signal input to the forward error correction circuit (FEC) becomes an occurrence rate exceeding the limit value G, the error correction capability of the forward error correction circuit (FEC) is exceeded. This results in shifting to a region where error correction is impossible, and as illustrated by the straight line L1, a bit error rate BER of the signal output from the forward error correction circuit (FEC) becomes being in a state of a bit error rate BER of the input signal without change.

Meanwhile, when a bit error rate BER of the input signal is smaller than the limit value G, this corresponds to a region where error correction is possible in the forward error correction circuit (FEC). When a bit error rate BER is smaller than the limit value G, error correction is more reliably performed as a bit error rate BER of the input signal becomes smaller, and thus, as illustrated by the straight line L2, a bit error rate BER of the signal output from the forward error correction circuit (FEC) is in a state of being "0".

However, when a bit error rate BER of the input signal approaches the limit value G and reaches the limit vicinity region R surrounded by the broken line in Fig. 2, reliable error correction cannot be performed by the forward error correction circuit (FEC). When a rate BER reaches the limit vicinity region R surrounded by the broken line in Fig. 2, as illustrated by the straight line L3, a bit error rate BER of the signal output from the forward error correction circuit (FEC) gradually increases from '0'. Further, in such a limit vicinity region R, due to variations in characteristics of optical portions of the optical receiver 2, variations occur in error correction results of the respective forward correction circuits (FECs) of the first optical receiving circuit 13, the second optical receiving circuit 14, and the third optical receiving circuit 15. The optical portions of the optical receiver 2 correspond to a local emission light source, an optical mixer (interference between signal light and local emission light), optical branching, and the like, for example.

For this reason, in the limit vicinity region R, it is effective that the bit determining circuit 19 performs majority-decision determination on three signals output from the first optical receiving circuit 13, the second optical receiving circuit 14, and the third optical receiving circuit 15 respectively via three of the first synchronization circuit 16, the second synchronization circuit 17, and the third synchronization circuit 18. In the limit vicinity region R, the bit determining circuit 19 performs majority-decision determination on three signals output from the respective optical receiving circuits, and thereby, the configuration of the optical receiver 2 as illustrated in Fig. 1 becomes effective.

Note that in the case of the region that is on the left side of the limit vicinity region R and in which a bit error rate BER is small, error correction is reliably performed as indicated by the straight line L2, and three signals output from the first optical receiving circuit 13, the second optical receiving circuit 14, and the third optical receiving circuit 15 match with one another. Thus, the majority-decision determination in the bit determining circuit 19 becomes non-effective. Further, in the case of the region that is on the right side of the limit vicinity region R and in which a bit error rate BER exceeds the limit value G of the error correction capability and is high, the error correction cannot become effective as indicated by the straight line LI. In the case of the region in which a bit error rate BER exceeds the limit value G of the error correction capability, three signals output from the first optical receiving circuit 13, the second optical receiving circuit 14, and the third optical receiving circuit 15 vary, and thus, the majority-decision determination in the bit determining circuit 19 cannot become effective.

As described above in detail, in a receiving system of the optical transmission system including the optical transmitter 1, the optical transmission line, and the optical receiver 2 as illustrated in Fig. 1 is configured as follows. In other words, one optical reception signal is branched into three signals in the optical branching unit 12, and each of three optical receiving circuits of the first optical receiving circuit 13, the second optical receiving circuit 14, and the third optical receiving circuit 15 independently performs error correction. Further, the first synchronization circuit 16, the second synchronization circuit 17, and the third synchronization circuit 18 synchronize the three signals after the error correction. In the bit determining circuit 19, the bit determining circuit 19 compares the three signal-synchronized signals for each bit at the same time, performs majority-decision determination, and thereby outputs a signal of a bit (code) determined as being correct.

Namely, in the present example embodiment, variations in error correction results of the error correction function due to characteristic variations of the optical portions (a local emission light source, an optical mixer (interference between signal light and local emission light), optical branching, and the like) of the optical receiver 2 are adjusted to a correct signal by using majority-decision determination. In other words, the majority-decision determination can improve determination accuracy in the limit vicinity region R that is the limit as to whether or not the error correction can be performed reliably by the majority-decision determination as illustrated in Fig. 3. Note that the term "characteristic variations" mentioned here means characteristic variations within a range of products delivered as appropriate products, and does not mean those of a level of specification defection due to a combination of such products.

The techniques described in PTL 1 and PTL 2 described above aim at dispersing causes of errors occurring on an optical transmission line. For this reason, the techniques disclosed in PTL 1 and PTL 2 described above repeatedly perform transmission or the like by formation of a plurality of routes, transmission speed differences among a plurality of signals, transmission timing differences among a plurality of signals, or time division multiplexing, and perform majority-decision determination. Thus, according to the techniques described in in PTL 1 and PTL 2 described above, redundancy needs to be provided not only on the optical reception side but also on the transmitting side of optical signals and in the optical transmission line. Further, in the techniques described in PTL 1 and PTL 2 described above, there is a problem that a band of an optical transmission line is crowded by the same signals repeatedly transmitted to the optical transmission line.

Meanwhile, in the above-described example embodiment, since the redundant configuration is added only to and within the optical receiver 2, equipment investment cost and operation cost can be made small, and a band of the optical transmission line can be effectively used without being crowded. Thus, application to an extremely long-distance wavelength multiplex optical transmission system based on an optical amplification transmission method can be suitably made.

### (Other Example Embodiments)

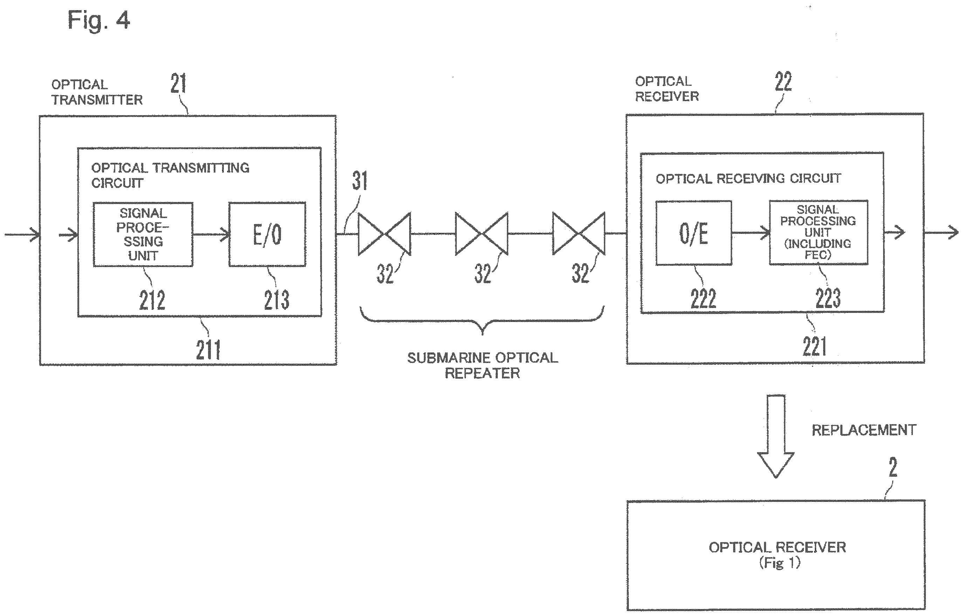

In the example embodiment described above, a land transmission system is assumed as an optical transmission system to which the optical receiver 2 is applied, but without limitation to this case, application can be made to a submarine optical cable system as illustrated in Fig. 4. Fig. 4 is a system configuration diagram illustrating one example of a general system configuration of a submarine optical cable system. As illustrated in Fig. 4, the submarine optical cable system is configured in such a way as to lay a submarine optical cable 31 passing through a large number of submarine optical repeaters 32 in a seabed section extending over an extremely long distance, and thereby make connection between the optical transmitter 21 installed on land and the optical receiver 22, as illustrated in Fig. 4. The optical transmitter 21 is configured in such a way as to include an optical transmitting circuit 211 provided with a signal processing unit 212 and an electric-signal-to-optical-signal (E/O) converter 213. The optical receiver 22 is configured in such a way as to include an optical receiving circuit 221 provided with an optical-signal-to-electric-signal (O/E) converter 222 and a signal processing unit 223 including a forward error correction circuit.

Here, needless to say, even when the optical receiver 22 in the submarine optical cable system with the system configuration as illustrated in Fig. 4 is replaced with the optical receiver 2 as exemplified in Fig. 1, a system function as a submarine optical cable system can be implemented without any problem at all.

### (Description of Advantageous Effect of Example Embodiment)

As described above in detail, in the above-described example embodiment, it is possible to obtain an advantageous effect that correction capability equivalent to or greater than capability of an error correction code can be economically obtained. In the above-described example embodiment, as described above in detail, the redundant configuration is introduced only in the optical receiver 2, and three of the first, second, and third optical receiving circuits 13, 14, and 15 installed in the optical receiver 2 independently perform the separate signal processes, respectively. In such a case, since positions of errors remaining after correction by respective error correction codes differ from one another, the bit determining circuit 19 performs error determination by the majority-decision determination. As a result, even when the optical transmitter 1 and the optical transmission line do not have a redundant configuration, additional error correction can be performed separately from that of an error correction code, and thus, such an advantageous effect can be achieved.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2016-70620, filed on March 31, 2016, the disclosure of which is incorporated herein in its entirety by reference.

### [Reference signs List]

- 1: Optical transmitter
- 2: Optical receiver
- 11: Optical transmitting circuit
- 12: Optical branching unit
- 13: First optical receiving circuit
- 14: Second optical receiving circuit
- 15: Third optical receiving circuit
- 16: First synchronization circuit
- 17: Second synchronization circuit
- 18: Third synchronization circuit
- 19: Bit determining circuit
- 21: Optical transmitter
- 22: Optical receiver
- 31: Submarine optical cable
- 32: Submarine optical repeater
- 211: Optical transmitting circuit
- 212: Signal processing unit
- 213: Electric-signal-to-optical-signal (E/O) converter
- 221: Optical reception circuit
- 222: Optical-signal-to-electric-signal (O/E) converter
- 223: Signal processing unit
- G: Limit value
- R: Limit vicinity area

## Claims

1. An optical receiver that receives an optical signal including an error correction code, the optical receiver comprising:
an optical branching means for branching a received optical signal into three optical signals, and outputting the optical signals;
three optical signal processing means for inputting one of three optical signals branched by the optical branching means, operating independently, and performing signal processing including an identification and reproduction process concerning an input optical signal and an error correction process based on the error correction code; and
a bit determining means for performing, in a bit unit, majority-decision determination on three signals on which error correction processes have been performed and that are output respectively from the three optical signal processing means, and outputting a signal determined as being correct.

2. The optical receiver according to claim 1, further comprising
a bit synchronization means for synchronizing, in a bit unit, three signals on which the error correction processes have been performed and that are output respectively from the three optical signal processing means, wherein
the bit determining means compares, at a same timing, three signals that have been synchronized and output by the bit synchronization means, and performs the majority-decision determination, instead of three signals on which the error correction processes have been performed and that are output respectively from the three optical signal processing means.

3. The optical receiver according to claim 2, wherein the bit synchronization means synchronizes three signals by detecting predetermined control signals included in overhead parts of signals respectively output from the three optical signal processing means.

4. The optical receiver according to claim 3, wherein, when an optical transport network (OTN) frame is applied as an optical signal to be transmitted, the optical receiver uses, as the control signal to be detected for synchronization performed by the bit synchronization means, a frame synchronization signal (frame alignment sequence (FAS)) included in an overhead part of the OTN frame.

5. An optical transmission system that comprises an optical transmitter, an optical transmission line, and an optical receiver, wherein the optical receiver is configured by using the optical receiver according to any one of claims 1 to 4.

6. A submarine optical cable system that comprises an optical transmitter, a submarine optical cable, a submarine optical repeater, and an optical receiver, wherein the optical receiver is configured by using the optical receiver according to any one of claims 1 to 4.

7. An optical signal receiving method for receiving an optical signal including an error correction code, the method comprising:
branching a received optical signal into three optical signals, and outputting the optical signals;
inputting each one of three branched optical signals, and independently performing, on each of input optical signals, signal processing including an identification and reproduction process concerning an input optical signal and an error correction process based on the error correction code; and
performing, in a bit unit, majority-decision determination on three generated signals on which error correction processes have been performed, and outputting a signal determined as being correct.

8. The optical signal receiving method according to claim 7, further comprising:
synchronizing, in a bit unit, three signals on which the error correction processes have been performed, and outputting the synchronized signals; and
comparing, at a same timing, three synchronized and output signals, and performing the majority-decision determination.

9. The optical signal receiving method according to claim 8, further comprising
detecting predetermined control signals included in respective overhead parts of three signals on which the error correction processes have been performed, and thereby synchronizing three signals on which the error correction processes have been performed.

10. The optical signal receiving method according to claim 9, wherein, when an optical transport network (OTN) frame is applied as an optical signal to be transmitted, a frame synchronization signal (frame alignment sequence (FAS)) included in an overhead part of the OTN frame is used as the control signal to be detected for synchronization performed in the bit synchronization step.
